**Europäisches Patentamt**

**European Patent Office**

**Office européen des brevets**

(11) Veröffentlichungsnummer: **0 040 396**
**A1**

## (12) EUROPÄISCHE PATENTANMELDUNG

(21) Anmeldenummer: **81103680.5**

(22) Anmeldetag: **13.05.81**

(51) Int. Cl.³: **C 04 B 3/00**
**F 27 B 1/08**

(30) Priorität: **21.05.80 GR 62005**

(43) Veröffentlichungstag der Anmeldung:
**25.11.81 Patentblatt 81/47**

(84) Benannte Vertragsstaaten:
**AT IT NL**

(71) Anmelder: **Financial Mining- Industrial and Shipping
Corporation
18-20 Sikelias Strasse
Athen 404(GR)**

(72) Erfinder: **Scalistiris, Michael D.
Lofou and Fteris
Nea Politeia Attika(GR)**

(74) Vertreter: **Glawe, Richard, Dr. Dipl.-Ing. et al,
Glawe, Delfs, Moll & Partner Rothenbaumchaussee 58
D-2000 Hamburg 13(DE)**

(54) Verfahren zum Betreiben eines Schachtofens.

㉗ Gegenstand der Erfindung ist ein Verfahren zum Betreiben eines Schachtofens, insbesondere zur Herstellung totgebrannter Magnesitprodukte oder totgebrannter Magnesia, bei dem schweres Heizöl als Brennstoff eingesetzt wird.

Croydon Printing Company Ltd.

COMPLETE DOCUMENT

EP 0 040 396 A1

GLAWE, DELFS, MOLL & PARTNER

PATENTANWÄLTE **0040396**
ZUGELASSENE VERTRETER BEIM EUROPÄISCHEN PATENTAMT

RICHARD GLAWE
DR.-ING.

KLAUS DELFS
DIPL.-ING

ULRICH MENGDEHL
DIPL.-CHEM. DR. RER. NAT.

WALTER MOLL
DIPL.-PHYS. DR. RER. NAT.
ÖFF. BEST. DOLMETSCHER

HEINRICH NIEBUHR
DIPL.-PHYS. DR. PHIL. HABIL.

8000 MÜNCHEN 26
POSTFACH 37
LIEBHERRSTR. 20
TEL. (089) 22 65 48
TELEX 52 25 05 SPEZ

2000 HAMBURG 13
POSTFACH 25 70
ROTHENBAUM-
CHAUSSEE 58
TEL. (040) 4 10 20 08
TELEX 21 29 21 SPEZ

HAMBURG

Verfahren zum Betreiben
eines Schachtofens.

Financial Mining and
Shipping Corporation
18-20 Sikelias St.,

Athen 404

Griechenland

p 9972/81 EU   M/bo

Beschreibung

Die Erfindung betrifft ein  Verfahren zum Betreiben eines
Schachtofens, insbesondere zur Herstellung totgebrannter
Magnesitprodukte oder totgebrannter Magnesia.

Die erfindungsgemäß hergestellten Magnesitprodukte sind unter
der Bezeichnung MAGFLOT (Warenzeichen der Anmelderin) bekannt;
sie stellen eine Reihe von Produkten dar, die direkt oder indirekt nach den griechischen Patenten 49556, 53335/216/169,
53482 und 53483 hergestellt werden können. Die gesamte Industriewelt verwendet für den Betrieb von Schachtöfen unabhängig von der
spezifischen Produktnatur Brennstoffe mit hohem Wärme- bzw.
Heizwert wie Gas oder flüssige (Diesel-) Brennstoffe.

Das erfindungsgemäß verwendete schwere Heizöl wird auch als
MAZOUT 3500'' REDWOOD I oder auch als BUNKER C OEL bezeichnet.
Dieses Öl ist ein flüssiger Brennstoff mit einem Heizwert, der
in der gleichen Größenordnung wie der von Gas oder Brennstoffen
vom Dieseltyp liegt. Dennoch wird schweres Heizöl nicht als für

... 2

0040396

Glawe, Delfs, Moll & Partner - p 9972/81 EU - Seite 2

den Betrieb von Schachtöfen geeignet angesehen, und
zwar wegen seiner unzureichenden chemischen Reinheit und
insbesondere wegen seines relativ hohen Schwefelgehaltes;
der enthaltene Schwefel kann unter bestimmten Betriebsbedingungen leicht in $SO_3$ überführt werden, von dem bekannt ist,
daß es feuerfeste Produkte nachteilig beeinflußt.

Der maximal erlaubte Schwefelgehalt für Dieselbrennstoffe
beträgt 1 %. Demgegenüber liegt der Schwefelgehalt von
MAZOUT 3500'' stets über 1 %; er beträgt in den meisten
Fällen zwischen 1,5 und 4,0 %, und zwar in Abhängigkeit von
der Herkunft des Öls.

Trotz des obigen Nachteils wurden jetzt Versuche unternommen,
um die genannten Brennstoffe für das Brennen von feuerfesten
Materialien in Schachtöfen zu prüfen. Die Verwendung von
schweren Heizölen für den Betrieb von Schachtöfen wäre insbesondere deshalb vorteilhaft, weil der Preis von MAZOUT 3500'',
z.B. in Griechenland, erheblich niedriger als der von Gas oder
Dieselbrennstoffen ist. Nach den Bestimmungen über die Preisfestsetzung des Marktinspektorats von Attika, Nr. 10/1980, I-2-80,
beträgt der Preis für eine Tonne MAZOUT 3500''. 5.500,- Drachmen,
im Vergleich zu 14.857,- Drachmen für eine Tonne Diesel (und/oder
2.500,- Drachmen für 1.000 Liter). Die vorgenannte erhebliche
Preisdifferenz zwischen zwei flüssigen Brennstoffen mit annähernd dem gleichen Heizwert, Diesel: 10.944 Kcal/kg und
MAZOUT 3500'': 10.222 Kcal/kg, und die weltweite Ölkrise
veranlaßten die Anmelder, Dieselbrennstoff durch MAZOUT 3500''
zu ersetzen, um eine kostengünstigere Herstellung von feuerfesten Produkten, erhalten durch thermische Behandlung in
Schachtöfen, zu ermöglichen.

... 3

0040396

Die wirtschaftliche Bedeutung der Verwendung von schwerem Heizöl erklärt sich unter der Voraussetzung, daß die Verwendung eines Brennstoffs mit einem in gewissem Umfang größeren Schwefelgehalt sich nicht nachteilig auf die Produktqualität auswirkt, von selbst.

Spezifiaktion von MAZOUT 3500'' REDWOOD I

Die Ergebnisse des Verfahrens der Erfindung wurden durch eine Reihe von Versuchen im Produktionsmaßstab bestätigt. Dabei wurden (a) die Betriebsbedingungen des Schachtofens während des Brennens überwacht und (b) die Produkte scharfen Qualitätsprüfungen unterzogen. Es erwies sich, daß MAZOUT 3500'' REDWOOD I für das Brennen von MAGFLOT-Produkten in einem Schachtofen als Brennstoff ebenso wirksam wie Dieselöl ist, solange es vor der Verwendung auf 40-70°C aufgeheizt wird.

Der Schwefelgehalt des MAZOUT 3500'' wirkt sich selbst bei einem Maximum von 4 % nicht nachteilig auf die Qualität der Produkte aus, deren Schüttdichte von 3,40 - 3,45 g/ml beibehalten wird. Bemerkenswert ist weiterhin, daß alle feuerfesten Produkte praktisch frei von Schwefel und/oder Schwefelverbindungen sind.

**0040396**

Tabelle

Spezifikation von MAZOUT 3500 '' REDWOOD I

| Physikalisch-chemische Parameter | Spezifikation | Testverfahren |
|---|---|---|
| Viskosität bei 37,8°C | max. 3500'Redwood I oder 350''Redwood II | (IP 70) |
| Flammpunkt (Plensky-Martens) | min. 66°C | (ASTM D-93) |
| Wasser (Vol.-%) | max. 1,0 | (ASTM D-95) |
| Rückstand (Gew.-%) (extrahiert) | max. 0,5 | (ASTM D-473) |
| Asche (Gew.-%) | max. 0,25 | (ASTM D-482) |
| Schwefel (Gew.-%) | max. 4,0 | (ASTM D-129) |
| Hartbitumen (Gew.-%) | min. 0,25 | (IP-61) |
| Paraffin | max. 8,0 | (IP-143) |

Bei dem Verfahren der Erfindung wird der eindeutige Vorteil erhalten, daß bei der Verwendung von MAZOUT 3500'' REDWOOD I als Brennstoff für Schachtöfen zum Brennen von MAGFLOT-Produkten eine drastische Reduzierung der Produktionskosten erreicht wird, wobei die wesentlichen feuerfesten bzw. hochtemperatur-beständigen Eigenschaften der Produkte sich vollständig ausbilden. Daraus folgt, daß MAZOUT 3500'' REDWOOD I als Brennstoff für das Brennen von feuerfesten Materialien in Schachtöfen eingesetzt werden kann, z.B. zum Brennen von Seewassermagnesia zur Herstellung von totge-brannter Magnesia.

**0040396**

Ansprüche

1. Verfahren zum Betreiben eines Schachtofens, insbesondere zur Herstellung totgebrannter Magnesitprodukte oder totgebrannter Magnesia, dadurch gekennzeichnet, daß man als Brennstoff auf eine Temperatur von 40 - 70°C vorgeheiztes schweres Heizöl, dem man gegebenenfalls andere Brennstoffe mit ähnlichen Kenndaten zusetzt, verwendet.

2. Verfahren nach Anspruch 1, dadurch gekennzeichnet, daß das schwere Heizöl einen Schwefelgehalt von 1 - 4 % aufweist.

3. Verfahren nach Anspruch 1, dadurch gekennzeichnet, daß das schwere Heizöl folgende Kenndaten aufweist

| Viskosität bei 37,8°C | max. | 3500' | Redwood I (IP 70) |
| | oder | 350'' | Redwood II |
| Flammpunkt (Plensky-Martens) | min. | 66°C | (ASTM D-93) |
| Wasser (Vol.-%) | max. | 1,0 | (ASTM D-95) |
| Rückstand (Gew.-%) (extrahiert) | max. | 0,5 | (ASTM D-473) |
| Asche (Gew.-%) | max. | 0,25 | (ASTM D-482) |
| Schwefel (Gew.-% | max. | 4,0 | (ASTM D-129) |
| Hartbitumen (Gew.-% | min. | 0,25 | (IP-61) |
| Paraffin | max. | 8,0 | (IP-143) |

4. Verfahren nach Anspruch 1, dadurch gekennzeichnet, daß man zur Herstellung von totgebrannter Magnesia von einer Seewassermagnesia ausgeht.

**0040396**
Nummer der Anmeldung

EP 81 10 3680

Europäisches
Patentamt

**EUROPÄISCHER RECHERCHENBERICHT**

| | **EINSCHLÄGIGE DOKUMENTE** | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| X | <u>BE - A - 810 284</u> (CARMEUSE et al.)<br><br>* Seite 2, Zeilen 1-8, 19-23; Seite 3, Zeilen 28-30 *<br><br>-- | 1,2 | C 04 B 3/00<br>F 27 B 1/08 |
| | ZEMENT-KALK-GIPS, Band 10, Juni 1957, Seiten 239-246 Wiesbaden, DE.<br>H. EIGEN: "Theorie und Praxis des ölbeheizten Kalkschachtofens"<br><br>* Seite 243, linke Spalte, Zeilen 13-35, rechte Spalte, Zeilen 1-7 *<br><br>-- | 1-3 | |
| A | <u>DE - C - 966 229</u> (WESTDEUTSCHE KALK- UND PORTLANDZEMENT-WERKE) | | RECHERCHIERTE SACHGEBIETE (Int. Cl.3)<br><br>C 04 B 3/00<br> 1/00<br>F 27 B 1/00 |
| A | <u>DE - B - 1 217 839</u> (RHEINISCHE KALKSTEINWERKE)<br><br>---- | | |

KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-8-1981 | DAELEMAN |

EPA form 1503.1 06.78